# EUROPEAN PATENT APPLICATION

(11) **EP 4 484 132 A1**
(43) Date of publication of application: **01.01.2025**
(21) Application number: 23760397.2
(22) Date of filing: 23.02.2023
(51) Int. Cl.: B29C 65/00, B29C 65/78, H01M 50/105, B29L 31/00

(54) **DEVICE FOR FOLDING POUCH FOR SECONDARY BATTERY AND SECONDARY BATTERY**

(30) Priority: 25.02.2022 KR 20220025558; 22.02.2023 KR 20230023905
(71) Applicant: LG Energy Solution, Ltd., Seoul 07335 (KR)
(72) Inventor: HAN, Myoung Hun, Daejeon 34122 (KR); KIM, Jin Young, Daejeon 34122 (KR); CHANG, Won Seok, Daejeon 34122 (KR); KIM, Nam Geol, Daejeon 34122 (KR)
(74) Representative: Goddar, Heinz J.
(86) International application number: PCT/KR2023/002600
(87) International publication number: WO 2023/163523

(57) **Abstract**

The present invention relates to a pouch folding device for a secondary battery and a secondary battery, and the pouch folding device for the secondary battery, which folds a pouch including a body, in which an electrode assembly is accommodated, and a sealing part disposed on an edge of the body, includes: a side folding part configured to side-fold the sealing part of the pouch toward the body; and a corner folding part comprising a corner folding roller configured to press a corner portion at the side-folded sealing part to fold a corner toward the body, wherein the corner folding roller comprises a flat surface and an inclined surface, and the inclined surface of the corner folding roller during the pressing is disposed closer to the body than the flat surface.

## Description

### TECHNICAL FIELD

### CROSS-REFERENCE TO RELATED APPLICATION

The present application claims the benefit of the priority of Korean Patent Application Nos. 10-2022-0025558, filed on February 25, 2022, and 10-2023-0023905, filed on February 22, 2023, which are hereby incorporated by reference in their entirety.

### TECHNICAL FIELD

The present invention relates to a pouch folding device for a secondary battery and a secondary battery.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may approximately classified into a jelly-roll type electrode assembly in which a separator is interposed between a positive electrode and a negative electrode, which are provided in a sheet type and coated with an active material, a stack-type electrode assembly, in which unit cells, in which at least one electrode and at least one separator are stacked, are sequentially stacked, and a stack/folding type electrode assembly in which unit cells are wound in the form of a long separation film.

When manufacturing the secondary battery, a process of folding a corner portion of a pouch accommodating an electrode assembly is performed. In the process of folding the corner portion of the pouch, there is a problem in insulation quality when the pouch is pressed with a mechanism.

More specifically, the pouch is provided with a cup part, which is a body in which the electrode assembly is accommodated, and a sealing part disposed along an edge of the cup part. Here, the sealing part has a flat shape, and the cup part has a three-dimensional shape that is convex with respect to the sealing part rather than being flat because the electrode assembly is accommodated.

In order to fold the pouch a lot, a mechanism has to be attached in a direction of the cup part, but if the cup part is pressed with the flat mechanism as an unsealed portion, the cup part may be damaged, and a risk occurs in insulation quality.

### DISCLOSURE OF THE INVENTION

### TECHNICAL PROBLEM

One aspect of the present invention is to provide a pouch folding device for a secondary battery, which is capable of securing insulation quality when a pouch is folded, and a secondary battery.

### TECHNICAL SOLUTION

A pouch folding device for a secondary battery, which folds a pouch including a body, in which an electrode assembly is accommodated, and a sealing part disposed on an edge of the body, according to an embodiment of the present invention includes: a side folding part configured to side-fold the sealing part of the pouch toward the body; and a corner folding part comprising a corner folding roller configured to press a corner portion at the side-folded sealing part to fold a corner toward the body, wherein the corner folding roller comprises a flat surface and an inclined surface, and the inclined surface of the corner folding roller during the pressing is disposed closer to the body than the flat surface.

A secondary battery according to an embodiment of the present invention may be a secondary battery manufactured through the pouch folding device for the secondary battery according to an embodiment of the present invention.

### ADVANTAGEOUS EFFECTS

According to the present invention, the corner of the pouch may be folded using the corner folding roller having the inclined surface to prevent the risk in insulation quality from occurring at the pouch portion that is not flat because the electrode assembly is accommodated. That is, in the corner folding roller, the flat surface having the constant diameter may press the sealing area of the flat pouch, and the inclined surface may press the non-sealing area of the pouch, which is not flat because the electrode assembly is accommodated, to prevent the non-sealing area of the pouch from being damaged and secure the insulation quality.

### BRIEF DESCRIPTION OF THE DRAWINGS

FIG. 1 is a plan view illustrating an example of a process of accommodating an electrode assembly in a pouch before the pouch is folded.
FIG. 2 is a front view illustrating a process of side-folding the pouch through a side folding part in a pouch folding device for a secondary battery according to an embodiment of the present invention.
FIG. 3 is a perspective view illustrating a state in which the pouch is side-folded through the pouch folding device for the secondary battery according to an embodiment of the present invention.
FIG. 4 is a perspective view of a corner folding part in the pouch folding device for the secondary battery according to an embodiment of the present invention.
FIG. 5 is a perspective view of a folding roller and a roller moving part in the pouch folding device for the secondary battery according to an embodiment of the present invention.
FIG. 6 is a front view of a corner folding roller in the pouch folding device for the secondary battery according to an embodiment of the present invention.
FIG. 7 is a perspective view illustrating a concept of the corner folding in the pouch folding device for the secondary battery according to an embodiment of the present invention.
FIG. 8 is a perspective view illustrating a corner-folded pouch in the pouch folding device for the secondary battery according to an embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

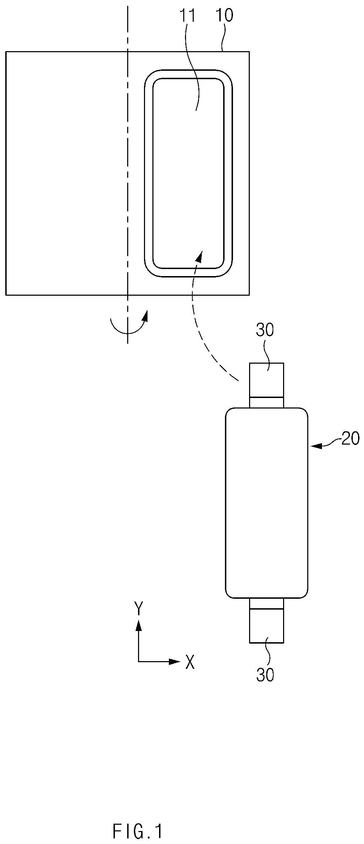

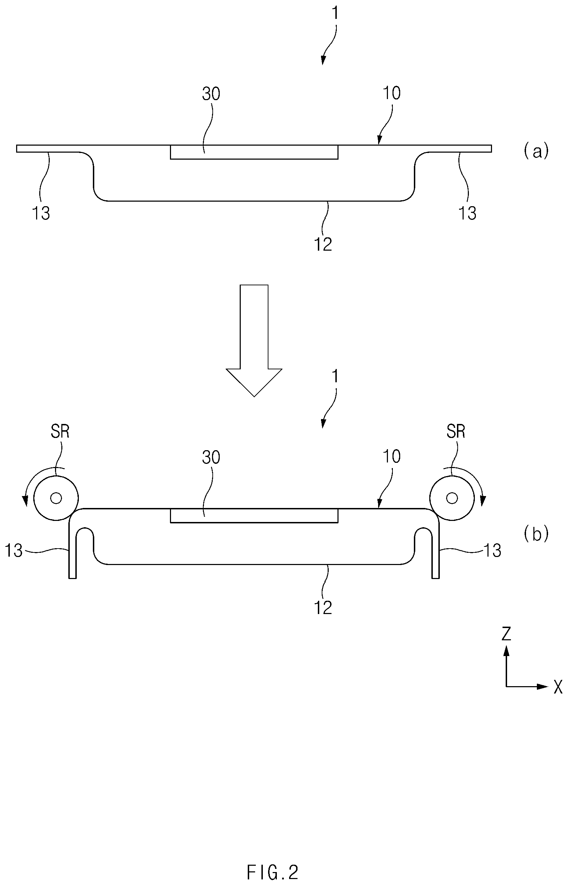

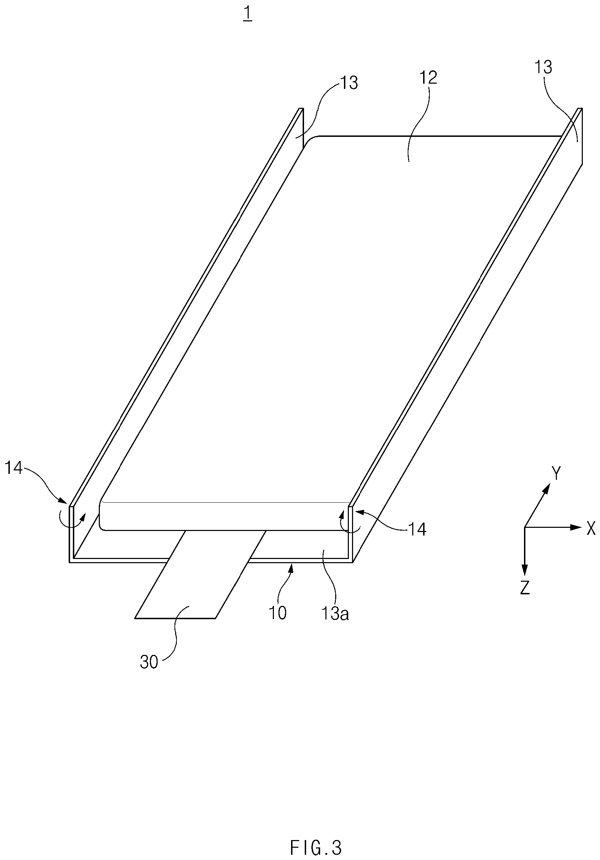

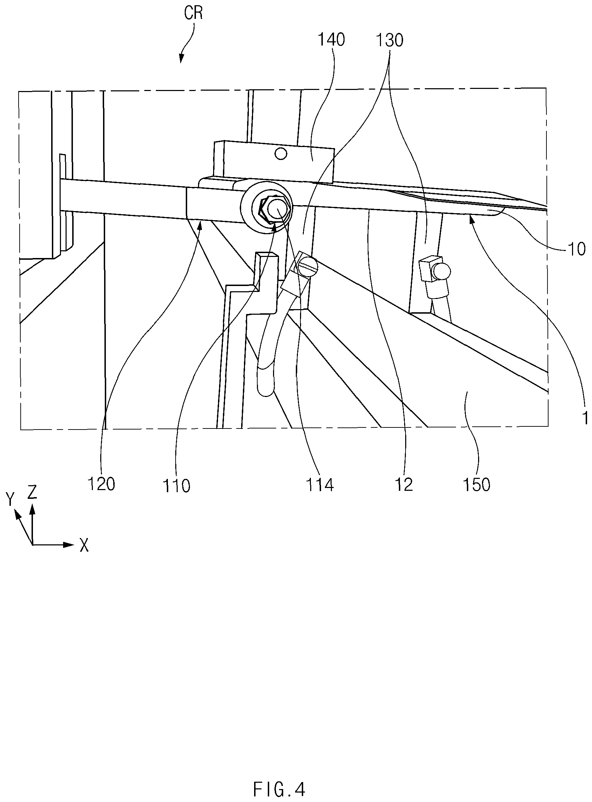

FIG. 1 is a plan view illustrating an example of a process of accommodating an electrode assembly in a pouch before the pouch is folded, FIG. 2 is a front view illustrating a process of side-folding the pouch through a side folding part in a pouch folding device for a secondary battery according to an embodiment of the present invention, FIG. 3 is a perspective view illustrating a state in which the pouch is side-folded through the pouch folding device for the secondary battery according to an embodiment of the present invention, and FIG. 4 is a perspective view of a corner folding part in the pouch folding device for the secondary battery according to an embodiment of the present invention.

Referring to FIGS. 1 to 4, a pouch folding device for a secondary battery according to an embodiment of the present invention may be a pouch folding device for a secondary battery, which folds a pouch 10 including a body 12, in which an electrode assembly 20 is accommodated, and a sealing part 13 and may include a side folding part SR that side-folds the sealing part 13 of the pouch 10 in a direction of the body 12 and a corner folding part CR that presses the corner portion 14 in the side-folded sealing part 13 to fold a corner in the direction of the body 12.

In more detail, referring to FIG. 1, a secondary battery 1 applied to the pouch folding device for the secondary battery according to an embodiment of the present invention includes an electrode assembly 20 and a pouch 10 accommodating the electrode assembly 20 in an accommodation part 11. In addition, the secondary battery 1 may further include an electrode lead 30 connected to the electrode assembly 20 to extend to the outside of the pouch 10. The electrode lead 30 may extend in a longitudinal direction of the secondary battery 1. Here, the longitudinal direction of the secondary battery 1 may be, for example, a Y-axis direction when referring to FIG. 1.

The pouch 10 includes a body 12 accommodating the electrode assembly 20 and a sealing part 13 disposed along an edge of the body 12.

Here, the sealing part 13 is provided in a flat shape, and the body 12 is provided in a three dimensional shape that is concave with respect to the sealing part 13 because the electrode assembly 20 is accommodated.

The electrode assembly 20 may be provided in an aggregated form by alternately stacking electrodes and separators. Here, the electrode assembly 20 is a power generating element capable of charging and discharging.

The electrode includes a positive electrode and a negative electrode, and in the electrode assembly 20, the positive electrode, a separator, the negative electrode may be alternately stacked. here, each of the separators separates the positive electrode from the negative electrode to electrically insulate the positive electrode from the negative electrode.

The positive electrode may comprise a positive electrode collector and a positive electrode active material stacked on the positive electrode collector.

The positive electrode collector may be made of an aluminum foil.

The positive electrode active material may comprise lithium manganese oxide, lithium cobalt oxide, lithium nickel oxide, lithium iron phosphate, or a compound or mixture containing at least one of the above-described materials.

The negative electrode may comprise a negative electrode collector and a negative active material stacked on the negative electrode collector.

The negative electrode collector may be made of, for example, a foil made of a copper (Cu) material.

The negative active material may be a compound or a mixture containing a graphite-based material.

The separator is made of an insulating material to electrically insulates the positive electrode and the negative electrode from each other. Here, the separator may be made of a polyolefin-based resin film such as polyethylene or polypropylene having microporosity.

Referring to FIGS. 2 and 3, the side folding part SR may side-fold the sealing part 13 of the pouch 10 toward the body 12.

The side folding parts SR may fold the sealing part 13 disposed at each of both sides of the pouch 10 toward the body 12. Here, the side folding part SR may side-fold the sealing parts 13 disposed on both sides of the pouch 10 in the direction of the width of the pouch 10 toward the body 12. Here, a width direction of the pouch 10 may be a lateral direction with respect to a longitudinal direction of the pouch 10 in which the electrode lead 30 connected to the electrode assembly 20 extends. That is, when referring to FIG. 3, the width direction of the pouch 10 may be an X-axis direction. Also, the width direction of the pouch 10 may be the same as a width direction of the secondary battery 1.

In addition, the side folding part SR may fold each of both sides of the sealing part 13 of the pouch 10 at a right angle.

In addition, the side folding part SR may be provided as, for example, a side folding roller. Here, both the sides of the sealing part 13 of the pouch 10 may be pressed and folded through the side folding roller. However, in the pouch folding device for the secondary battery according to an embodiment of the present invention, the side folding part SR is not necessarily limited to the side folding roller, and various folding mechanisms may be used. For example, a plurality of folding blocks may be disposed to be crossed with each other to press and fold the sealing part 13 of the pouch 10.

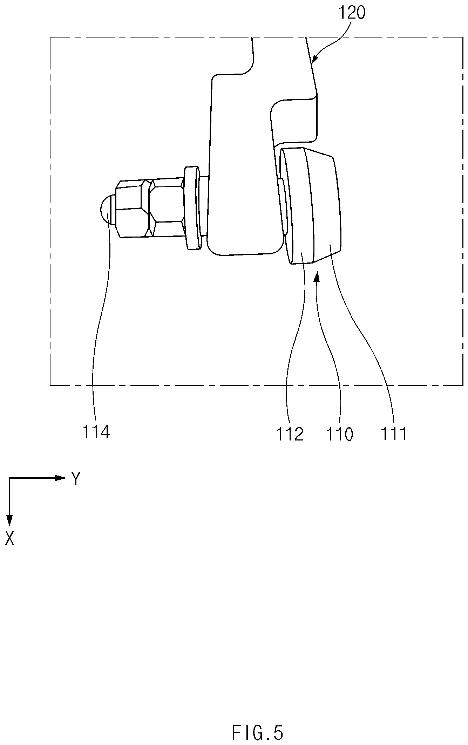

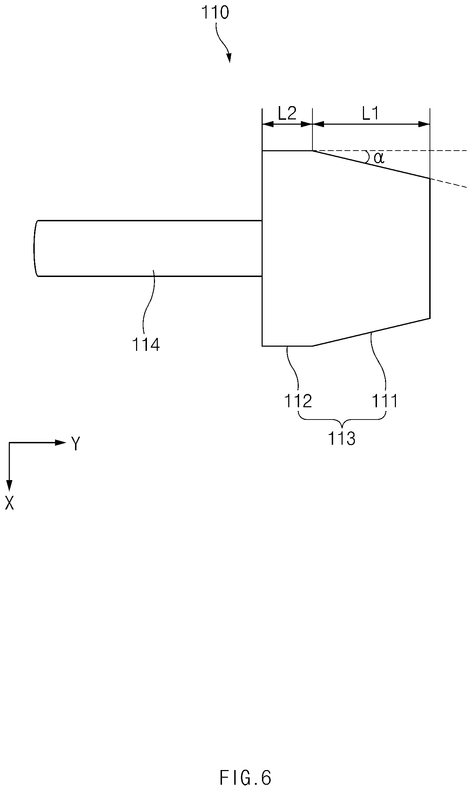

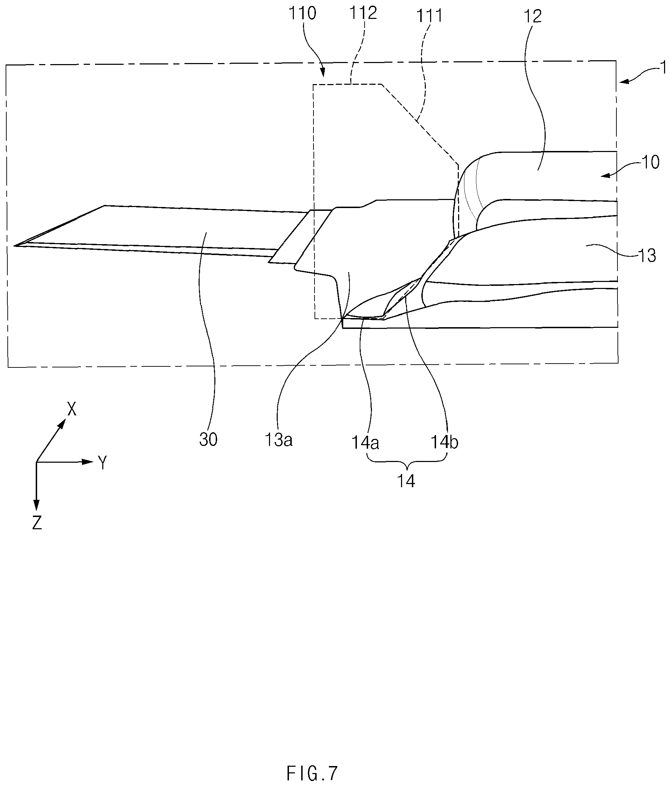

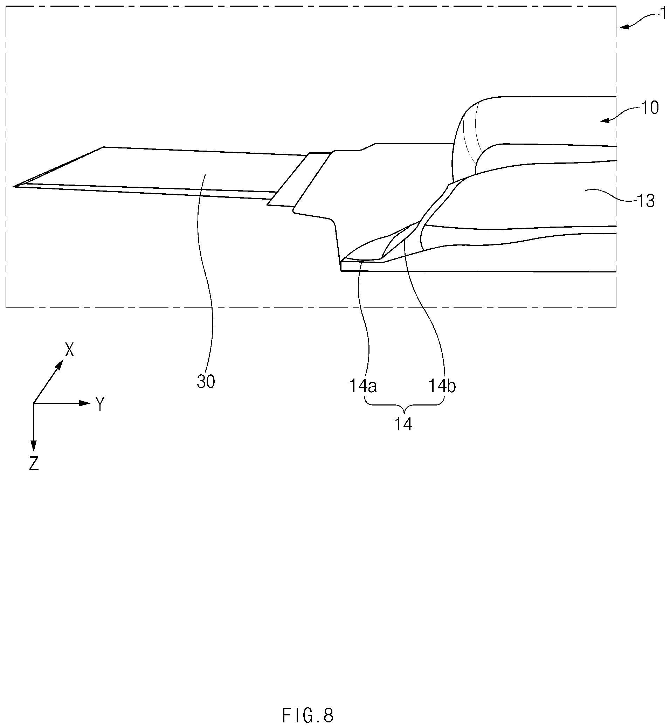

FIG. 5 is a perspective view of a folding roller and a roller moving part in the pouch folding device for the secondary battery according to an embodiment of the present invention, and FIG. 6 is a front view of a corner folding roller in the pouch folding device for the secondary battery according to an embodiment of the present invention. FIG. 7 is a perspective view illustrating a concept of the corner folding in the pouch folding device for the secondary battery according to an embodiment of the present invention, and FIG. 8 is a perspective view illustrating a corner-folded pouch in the pouch folding device for the secondary battery according to an embodiment of the present invention.

Referring to FIGS. 4 to 8, a corner folding part CR may include a corner folding roller 110 that presses a corner portion 14 in the side-folded sealing part 13 to fold a corner toward the body 12.

Referring to FIGS. 4 and 5, the corner folding part CR moves the corner folding roller 110 from an outer edge of the pouch 10 toward a central portion to fold the corner so that the corner portion 14 of the side-folded sealing part 13 is in close contact with an outer surface of the pouch 10. In addition, the corner folding part CR may move the corner folding roller 110 in the X-axis direction, which is the width direction of the pouch 10, after the pouch 10 is disposed in parallel to an XY plane, to seal the corner of the sealing part 13.

Referring to FIGS. 6 and 7, the corner folding roller 110 may include a flat surface 112 and an inclined surface 111, which are disposed on the pressing surface 113. Here, the inclined surface 111 may be disposed at an end of the corner folding roller 110. That is, an outer circumferential portion of the corner folding roller 110 that presses the pouch 10 may include a flat surface 112 having a constant diameter and an inclined surface 111 having a diameter that gradually decreases toward an end thereof. In addition, during the pressing, in the folding roller, the inclined surface 111 may be disposed closer to the body 12 than the flat surface 112.

Here, when the corner portion 14 of the side-folded sealing part 13 is pressed through the corner folding roller 110, the inclined surface 111 may be disposed at a portion of the corner portion 14, which is in contact with the body 12. In more detail, the flat surface 112 may press a first portion 14a at the corner portion 14 of the pouch 10, and the inclined surface 111 may press a second portion 14b at the corner portion 14 of the pouch 10 to fold the corner portion 14 of the pouch 10. That is, the corner folding part CR may press the corner portion 14 of the sealing part 13, and when the corner is folded, the first portion 14a of the corner portion 14, which is pressed by the flat surface 112 of the corner folding roller 110, may be folded to be contacted with the portion of the sealing part 13, which is disposed in the longitudinal direction of the pouch 10, and the second portion 14b of the corner portion 14, which is pressed by the inclined surface 111 of the corner folding roller 110, may be folded to be contacted with the body 12.

Here, the first portion 14a may be folded at the corner portion 14 by the flat surface 112, and a sealing area of the flat pouch 10 may be pressed. In addition, the second portion 14b may be folded at the corner portion 14 by the inclined surface 111, and the electrode assembly 20 may be accommodated to press a non-sealing area of the pouch, which is not flat. Here, the sealing area of the pouch 10 to be pressed may be a portion of the sealing part 13, which extends in the longitudinal direction of the secondary battery 1, and the non-sealing area of the pouch 10 may be a portion of the body 12 of the pouch 10. At this time, the portion of the body 12 of the pouch 10, which is pressed by the inclined surface 111 of the corner folding roller 110, may be, for example, a terrace portion. Here, the terrace portion may be a portion of the body 12, which is not in contact with the electrode assembly 20. That is, the terrace portion may be a portion of the pouch 10, which is disposed in an empty space between an end of the electrode assembly 20 and the sealing part 13 of the pouch 10. Here, the terrace portion may be inclined.

In addition, in the corner folding roller 110, when the corner portion 14 of the sealing part 13 of the side-folded pouch 10 is pressed, the inclined surface 111 may be disposed at a side that is adjacent to the body with respect to the flat surface 112. Here, the inclined surface 111 of the corner folding roller 110 may have an inclination in which a width of an end thereof is gradually narrowed toward the end. At this time, an inclination angle α of the inclined surface 111 may range of, for example, 20° to 50°. Here, the inclination angle α of the inclined surface 111 may be an inclined angle of the inclined surface 111 with respect to a virtual extension line extending from the flat surface 112.

Therefore, since the inclination angle α of the inclined surface 111 is 20° or more, an effect on insulation quality may be remarkably improved. That is, when the pressing roller having a flat cylindrical shape without the inclined surface 111 presses the terrace portion that is the non-sealing area of the pouch 10, which is not flat because the electrode assembly 20 is accommodated, the non-sealing area of the pouch 10 may be damaged by an edge portion of the pressing roller. However, in the pouch folding device for the secondary battery according to an embodiment of the present invention, since the inclined surface 111 of the corner folding roller 110 has an inclination angle α of 20° or more, when the corner portion 14 of the sealing part 13 of the pouch 10 is pressed, the terrace portion that is the non-sealing area of the pouch 10, which is not flat, may be pressed so as not to be damaged, and thus, the non-sealing area of the pouch 10 may be prevented from being damaged to secure the insulation quality.

In addition, since the inclination angle α of the inclined surface 111 is 50° or less, there is an effect of adjusting a degree of folding of the pouch in a desired shape. That is, when the inclination angle α of the inclined surface 111 exceeds 50°, the folding effect may be remarkably small. As a result, when the inclination angle α of the inclined surface 111 exceeds 50 °, the inclined surface 111 may not press the non-sealing area of the pouch 10, which is not flat, or the corner portion 14 of the sealing part 13 of the pouch 10 may not properly perform the folding, and the non-sealing area of the pouch 10, which is not flat, may be damaged by the edge between the inclined surface 111 and the flat surface 112 to deteriorate the insulation quality.

A length L2 of the flat surface 112 may be, for example, 2 mm or more. Thus, the length L2 of the flat surface 112 in the corner folding roller 110 may be 2 mm or more, and thus, the corner folding of the sealing part 13 of the side-folded pouch 10 may be possible.

For example, in the corner folding roller 110, a length L1 of an orthogonal projection of the inclined surface 111 may be greater than the length L2 of the flat surface 112. In addition, in the corner folding roller 110, the length L1 of the orthogonal projection of the inclined surface 111 may be 400% or less of the length L2 of the flat surface 112.

The corner folding roller 110 may further include a roller shaft 114. The roller shaft 114 may be configured as a rotation shaft of the corner folding roller 110.

When the corner of the sealing part 13 of the pouch 10 is folded through the corner folding roller 110, for example, the folding may be performed at room temperature, but the method for implementing the pouch folding device of the secondary battery according to an embodiment of the present invention is not necessarily limited thereto.

In the device for folding the secondary battery pouch 10 according to the embodiment of the present invention, the corner folding part CR may further include a roller moving part 120, a lower support 130, an upper support 140, and a support frame 150.

The corner folding roller 110 may be mounted on the roller moving part 120 so as to be moved. In addition, the roller moving part 120 may move the corner folding roller 110 along the X-axis direction from the outside of the pouch 10 toward a central portion.

The lower support 130 may support a lower portion of the pouch 10 during the folding of the corner. The lower support 130 may be provided as a plurality of blocks to support a lower end of the body 12 of the pouch 10.

The upper support 140 may support an upper portion of the pouch 10 during the folding of the corner. The upper support 140 may be disposed at an opposite side between the corner folding roller 110 and the pouch 10 when the pouch 10 is pressed through the corner folding roller 110. Thus, when the pouch 10 is pressed through the corner folding roller 110, the pouch 10 may be supported, and thus, the folding operation may be easily performed.

The support frame 150 may support each device of the corner folding part CR.

Referring to FIGS. 5 and 6, the pouch folding device for the secondary battery according to the present invention, which are configured as described above, may use the corner folding roller 110 disposed on the inclined surface 111 to fold the corner portion 14 of the pouch 10, thereby prevent the risk of the insulation quality from occurring at the portion of the pouch 10, which is not flat because the electrode assembly 20 is accommodated. That is, the flat surface 112 of the corner folding roller 110, which has the constant diameter, may press the sealing area of the flat pouch 10, and the inclined surface 111 may press the non-sealing area of the pouch 10, which is not flat because the electrode assembly is accommodated, to prevent the non-sealing area of the pouch 10 from being damaged and secure the insulation quality.

Referring to FIGS. 1, 7, and 8, a secondary battery 1 may be manufactured through the pouch folding device for the secondary battery according to an embodiment of the present invention.

That is, the secondary battery according to the embodiment of the present invention is the secondary battery 1 manufactured through the pouch folding device for the secondary battery according to the foregoing embodiment of the present invention.

In the secondary battery 1, the corner portion 14 of the sealing part 13 of the pouch 10 is provided in a state of being corner-folded and bent toward the body.

The bent corner portion 14 includes a first portion 14a that is folded by being pressed by the flat surface 112 of the corner folding roller 110 and a second portion 14b that is folded by being pressed by the inclined surface 111.

The first portion 14a provides a flat portion, and the second portion 14b provides an inclined portion inclined with respect to the first portion 14a.

The second portion 14b may be inclined at an angle of 20° to 50° with respect to a virtual extension line of the first portion 14a.

### <Manufacturing Example>

A pouch folding device for a secondary battery, which folds a pouch including a body accommodating an electrode assembly and a sealing part formed along an edge of the body was manufactured.

The pouch folding device for the secondary battery was manufactured by including a corner folding part that presses a corner portion of a side-folded sealing part to fold a corner toward the body.

The corner folding part was provided as a corner folding roller including a flat surface and an inclined surface, which are formed on a pressing surface.

The corner folding roller was manufactured in a form in which the inclined surface is disposed to be adjacent to the body of the pouch during the pressing.

In addition, referring to FIG. 6, the corner folding roller was formed so that a length L2 of the flat surface 112 is formed to be 2 mm, and a length L1 of an orthogonal projection of the inclined surface 111 is formed to be 3.5 mm. In addition, an inclination angle α of the inclined surface 111 was formed to be 25°.

### <Comparative Example>

A pouch folding device for a secondary battery was manufactured in the same manner as in Manufacturing Example, except that an entire pressing surface of a corner folding roller is formed as a flat surface.

### <Experimental Example>

An IR (resistance) defect rate and an IV (voltage) defect rate of the corner folding portion of the pouch in the secondary battery manufactured through the pouch folding device for secondary battery according to Embodiment and Comparative Examples were measured based on 100 MOhm.

Here, a corner of the secondary battery having the sealing part having a width of 2 mm in the pouch was folded.

**[Table 1]**

| | Manufacturing Example | Comparative Example |
|---|---|---|
| IR Defect rate | 1.7% | 8.2% |
| IV Defect rate | 0.0% | 3.45% |

As shown in Table 1, it is seen that the IR defect rate in Comparative Example was 8.2%, whereas the IR defect rate in Manufacturing Example was significantly reduced to 1.7%. In addition, it is seen that the IR defect rate in Comparative Example was 3.45%, whereas the IR defect rate in Manufacturing Example was significantly reduced to 0.0%. Therefore, it is seen that an insulation defect rate is significantly reduced in Manufacturing Example compared to Comparative Example.

While the present invention has been particularly shown and described with reference to exemplary embodiments thereof, it is to be understood that the scope of the present invention is not limited thereto. It will be understood by those of ordinary skill in the art that various changes in form and details may be made therein without departing from the spirit and scope of the present invention.

Furthermore, the scope of protection of the present invention will be clarified by the appended claims.

### [Description of the Symbols]

1: Secondary battery
10: Pouch
11: Accommodation part
12: Body
13: Sealing part
14: Corner portion
14a: First portion
14b: Second portion
20: Electrode assembly
30: Electrode lead
110: Corner folding roller
111: Inclined surface
112: Flat surface
113: Pressing surface
114: Roller shaft
120: Roller moving part
130: Lower support
140: Upper support
150: Support frame
SR: Side folding part
CR: Corner folding part

## Claims

1. A pouch folding device for a secondary battery, which folds a pouch comprising a body, in which an electrode assembly is accommodated, and a sealing part disposed on an edge of the body, the pouch folding device comprising:
a side folding part configured to side-fold the sealing part of the pouch toward the body; and
a corner folding part comprising a corner folding roller configured to press a corner portion at the side-folded sealing part to fold a corner toward the body,
wherein the corner folding roller comprises a flat surface and an inclined surface, and
the inclined surface of the corner folding roller during the pressing is disposed closer to the body than the flat surface.

2. The pouch folding device of claim 1, wherein the side folding part is configured to fold the sealing part disposed at each of both sides of the pouch toward the body.

3. The pouch folding device of claim 2, wherein the side folding part is configured to fold the sealing part disposed at each of both the sides of the pouch in a width direction of the pouch, and
the width direction of the pouch is a lateral direction with respect to a longitudinal direction of the pouch in which an electrode lead connected to the electrode assembly extends.

4. The pouch folding device of claim 3, wherein the corner folding part is configured to move the corner folding roller from the outside to a central portion of the pouch, which is the direction of the body and allow the corner portion of the side-folded sealing part to be in close contact with an outer surface of the pouch.

5. The pouch folding device of claim 4, wherein, in the corner folding part, when the corner portion is pressed to fold the corner, a first portion of the corner portion, which is pressed by the flat surface of the corner folding roller, is folded to be in contact with a portion of the sealing part, which is disposed in a longitudinal direction of the pouch, and a second portion of the corner portion, which is pressed by the inclined surface of the corner folding roller, is folded to be in contact with the body.

6. The pouch folding device of claim 1, wherein the inclined surface is disposed at an end of the corner folding roller.

7. The pouch folding device of claim 6, wherein the inclined surface of the corner folding roller is inclined so that a width of the end is gradually narrowed toward the end.

8. The pouch folding device of claim 7, wherein the inclined surface has an inclined angle of 20° to 50°.

9. The pouch folding device of claim 1, wherein the corner folding part further comprises a roller moving part on which the corner folding roller is mounted so that the corner folding roller is moved.

10. The pouch folding device of claim 1, wherein the corner folding part further comprises a lower support configured to support a lower portion of the pouch when the corner is folded.

11. The pouch folding device of claim 1, wherein the corner folding part further comprises an upper support configured to support an upper portion of the pouch when the corner is folded.

12. A secondary battery manufactured through the pouch folding device for the secondary battery, which is disclosed in any one of claims 1 to 11.

13. The secondary battery of claim 12, wherein the secondary battery is provided in a state in which the corner portion of the sealing part of the pouch is corner-folded and bent toward the body,
the bent corner portion comprises a first portion folded by being pressed by the flat surface of the corner folding roller and a second portion folded by being pressed by the inclined surface, and
the second portion is inclined at an angle of 20° to 50° with respect to an extension line of the first portion.
